Europäisches Patentamt

European Patent Office

Office européen des brevets

(19)

(11) Publication number: **0 119 838**
**B1**

(12) **EUROPEAN PATENT SPECIFICATION**

(45) Date of publication of patent specification: **24.06.87**

(21) Application number: **84301764.1**

(22) Date of filing: **15.03.84**

(51) Int. Cl.⁴: **H 01 B 17/50,** H 01 B 3/12,
H 01 B 3/08

(54) High voltage porcelain insulators.

(30) Priority: **16.03.83 JP 42418/83**

(43) Date of publication of application:
**26.09.84 Bulletin 84/39**

(45) Publication of the grant of the patent:
**24.06.87 Bulletin 87/26**

(84) Designated Contracting States:
**BE DE FR GB IT SE**

(56) References cited:
**DE-A-2 625 071**
**DE-A-2 633 289**
**DE-A-2 818 878**

**TRANSACTIONS OF Xth INTERNATIONAL
CERAMIC CONGRESS, published by the
Organizing Committe of said congress,
Stockholm, 1966, P.P. BUDNIKOW et al.
"Einfluss der Glasphase auf einige
charakteristische Eigenschaften von
Hochspannungsporzellan" pages 155-165**

(73) Proprietor: **NGK INSULATORS, LTD.**
**2-56, Suda-cho, Mizuho-ku**
**Nagoya-shi, Aichi 467 (JP)**

(72) Inventor: **Mitsumatsu, Yoshi**
**2-146 Aza-Fukitsuke Ohaza-Ishihama**
**Higashiura-cho Chita-Gun Aichi Pref. (JP)**
Inventor: **Seike, Shoji**
**167-1 Taishi 2-chome Midori-ku**
**Nagoya City (JP)**

(74) Representative: **Paget, Hugh Charles Edward
et al**
**MEWBURN ELLIS & CO. 2/3 Cursitor Street
London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**0 119 838**

## Description

The present invention relates to a high voltage porcelain insulator. More particularly, the present invention relates to a high voltage porcelain insulator which is suitable for high voltage direct current (DC) use but which is also available for high voltage alternating current (AC) use.

High voltage DC porcelain insulators have been used for electric precipitators or electric power systems. However, porcelain materials are liable to deteriorate when such insulators are used at high electrical stresses or at high temperatures.

High voltage DC insulators for use at high temperatures, have hitherto been made of porcelains which have high specific resistivity, superior thermal shock property and low thermal expansion coefficient.

Various studies have been made of the deterioration properties of procelains under DC voltage. See Kh.S. Valeyev et al "The Variation of the Electrical Strength of High Voltage Porcelain under Sustained High Direct Voltage" Elektrichestvo, No. 1, pp. 59—61 (1963) and P. P. Budnikov et al "The Effect of Vitreous Phase on the Properties of High-Tension Electrical Porcelain" Xth International Ceramic Congress in Stockholm, Sweden, June 12—18, 1966. In these reports, the deterioration properties of porcelains under DC voltage have been evaluated using test specimens having various compositions and it is concluded that specific resistivity of porcelains should preferably be high in order to reduce the deterioration of the porcelains due to DC stress. This conclusion has been explained by the reasoning that, when a porcelain is subjected to high DC voltage at high temperatures, ionic current is produced in it and a layer of high specific resistivity which contains a decreased amount of alkali metal component is formed at the positive electrode of the porcelain and a deposit of alkali metal is formed at the negative electrode of the porcelain. Hence mechanical properties and electrical properties of the porcelain deteriorate.

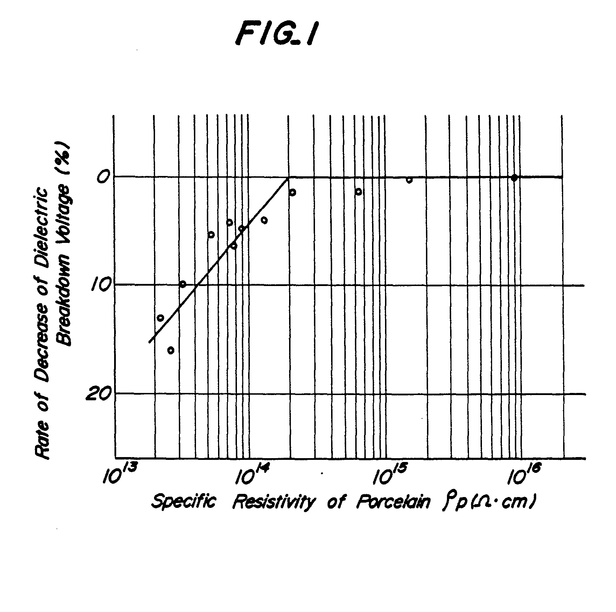

According to the results of tests which the inventors have performed on test specimens to evaluate the deterioration property of porcelains under DC voltage, there has been confirmed a tendency that the rate of decrease in dielectric breakdown voltage becomes low as specific resistivity of the porcelain becomes high as shown in the attached Fig. 1. This is similar to the results of the tests in the above publications. This is presumably because, under a certain condition of DC voltage, a porcelain of a high specific resistivity allows only a small electric current to flow and this has a smaller effect on deterioration of the porcelain.

Though studies have been conducted on the deterioration of porcelains by DC voltage using test specimens as mentioned above, there have been very few studies on deterioration properties under DC voltage of porcelain insulators produced by assembling porcelains and hard wares with the aid of cement and the like. Therefore, the mechanism of deterioration of porcelain insulators due to DC voltage has not yet been clarified.

An object of the present invention is to obviate the aforementioned drawbacks of conventional high voltage porcelain insulators.

Another object of the present invention is to provide a high voltage porcelain insulator which has high reliability and has suffered little deterioration even after a long service period under sustained high DC voltage.

The present invention provides a high voltage porcelain insulator, comprising a porcelain body, and a glaze applied on at least a portion of the porcelain body, said porcelain body having a specific resistivity $\rho_p$ of $\rho_p \geqq 5.0 \times 10^{13} \Omega \cdot cm$, and said glaze having a specific resistivity $\rho_g$ of $\rho_g < \rho_p$.

The present invention also provides a high voltage porcelain insulator, comprising a porcelain body, and a glaze applied on at least a portion of the porcelain body, the porcelain body having a specific resistivity $\rho_p$ of

$$1.0 \times 10^{14} \Omega \cdot cm \leqq \rho_p \leqq 1.0 \times 10^{16} \Omega \cdot cm,$$

and the glaze having a specific resistivity $\rho_g$ of

$$5.0 \times 10^{12} \Omega \cdot cm \leqq \rho_g \leqq 5.0 \times 10^{14} \Omega \cdot cm$$

and $\rho_g < \rho_p$.

Furthermore, the present invention provides a high voltage porcelain insulator, comprising a porcelain body, and a glaze applied on at least a portion of the porcelain body, the porcelain body having a specific resistivity $\rho_p$ of $\rho_p \geqq 5.0 \times 10^{13} \Omega \cdot cm$, and the glaze having a specific resistivity $\rho_g$ of $\rho_g \geqq 1 \times 10^{13} \Omega \cdot cm$ and $\rho_g < 0.8 \, \rho_p$.

Yet further the present invention provides a high voltage porcelain insulator, comprising a porcelain body and a glaze applied on at least a portion of the porcelain body, the porcelain body having a specific resistivity $\rho_p$ of

$$1.0 \times 10^{14} \Omega \cdot cm \leqq \rho_p \leqq 1.0 \times 10^{16} \Omega \cdot cm,$$

and the glaze having a specific resistivity $\rho_g$ of $\rho_g \geqq 1 \times 10^{13} \Omega \cdot cm$ and $\rho_g < 0.8 \, \rho_p$.

In connection with the surface resistance of porcelain insulators, attention is drawn to DE—A—2625071 which proposes the replacement of an applied semiconductive of low resistance ($10^4$—$10^5 \, \Omega$) by a relatively

2

conductive surface formed by implanting ions in the insulator. The preferred surface resistance obtained in the range is $10^5$—$10^{11}$ $\Omega$. The object of this conductive surface is for controlling the voltage distribution at the surface so as to control the leak currents passing at the surface.

Further discussion of the invention will now follow and embodiments thereof will be described in detail by way of example, with reference to the accompanying drawings, wherein:—

Fig. 1 is a graph of the deterioration of porcelain due to DC voltage, showing the rate of decrease (in %) of dielectric breakdown voltage in relation to specific resistivity $\rho_p$ of porcelains;

Fig. 2 is a graph based on ion accumulation tests of porcelain insulators, showing life (years) estimated from the ion accumulation test in relation to specific resistivity $\rho_p$ of porcelains;

Fig. 3 is a cross-sectional view of an embodiment of a porcelain insulator of the present invention; and

Fig. 4 is an enlarged partial view of part IV of Fig. 3.

In the drawings, numberings of referential numerals are as follows.

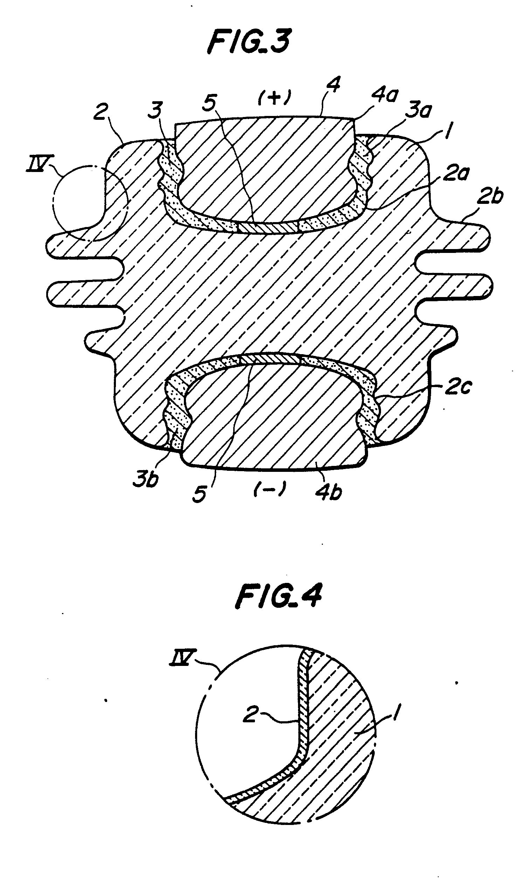

Referring first to Figs. 3 and 4 which exemplify an embodiment of high voltage porcelain insulator of the present invention, a porcelain body 1 is coated with glaze 2 on surface thereof and has hard wares 4 which form a positive electrode 4a and a negative electrode 4b respectively and which are securely fixed in a pair of opposite recesses in the porcelain body 1 through cement 3 via cork 5.

The glaze 2 can be considered sub-divided into a portion 2a which contacts the cement portion 3a, an externally exposed portion 2b and a portion 2c which contacts the other cement portion 3b.

The inventors have evaluated the deterioration of porcelain insulators due to DC voltage in the following way. In the testing method used, the porcelain insulators are subjected to a high DC voltage, for example 10 kv per insulator, for a certain period, for example one month, in an isothermal tank of e.g. 220°C, and the initial value of power frequency puncture voltage in oil before application of the DC voltage is compared to that after application of the DC voltage to determine the rate of change. Alternatively the porcelain insulator is subjected to a high DC voltage until breakdown and the time required for breakdown is measured. Hereinafter, the testing method will be called an "ion accumulation test".

The deterioration of a porcelain insulator in the ion accumulation test can be compared with deterioration in practical use as follows. The amount of accumulated Charge $C_1$ (coulomb) of electric current $i$ (ampere) flowing through the porcelain insulator until the time $t$ (sec) of breakdown of the porcelain insulator is expressed as follows:

$$C_1 = \int_0^t i\,dt$$

In the case of a post insulator shown in Fig. 3 as an example of a porcelain insulator the amount of the electric charge $C_o$ (coulomb) flowing through the post insulator during 50 years in an assumed situation of an average ambient temperature of 80°C and applied voltage of 90 kv can be calculated from a resistance value $R_{25}$ ($\Omega$) of the post insulator at 25°C and a temperature coefficient K of resistance value. A resistance value $R_{80}$ ($\Omega$) of the post insulator at 80°C, the electric current value $i$ (ampere) and the amount of the electric charge $C_o$ (coulomb) passing during the 50 years are expressed by the following equations.

$$R_{80} = R_{25}\ \exp\ K\{1/(273+80)-1/(273+25)\}$$

$$i = V/R = 90 \times 10^3/R_{80}$$

$$C_o = it = (90 \times 10^3/R_{80}) \times 60 \times 60 \times 24 \times 365 \times 50$$

$$= 1.419 \times 10^{14}/R_{80}$$

From the calculated amount of the electric charge $C_o$ (coulomb) during the 50 years and the amount of the accumulated charge $C_1$ (coulomb) until the breakdown of the post insulator in the ion accumulation test, an estimated life Y (years) of the post insulator (hereinafter abridged as "estimated life") can be expressed by the following formula.

$$Y = 50 \times C_1/C_o$$

The inventors have made many experiments leading to a finding that specific resistivity of a porcelain has a correlation with chemical composition of the porcelain, more precisely chemical composition and amount of vitreous phase of the porcelain. Generally, porcelains for high voltage insulators are composed of crystal phases such as corundum, quartz, mullite and crystoballite, etc., and vitreous phase consisting mainly of silica, alumina, alkali metal oxides and alkaline earth metal oxides. Crystalline components have higher specific resistivity than vitreous component, and specific resistivity of vitreous component varies exponentially depending on chemical composition, while the ratio of the amount of crystalline components to the amount of vitreous component varies very little. As a result, specific resistivity of a porcelain varies substantially corresponding to chemical composition of the porcelain. Relation between chemical composition and specific resistivity of porcelains is shown in embodiments which will later be described, and a tendency has been found that the specific resistivity of a porcelain becomes lower when an amount of sodium oxide becomes higher relative to amounts of potassium oxide, barium oxide, magnesium oxide and calcium oxide.

Meanwhile, a high voltage porcelain insulator is desired to have excellent electrical properties such as dielectric breakdown strength as well as good physical properties such as hardness, tensile strength. To achieve these desired properties, sufficient sintering of the porcelain in the firing process is important and proper selection of chemical composition of the porcelain is necessary. Increase of potassium oxide, barium oxide, magnesium oxide or calcium oxide in the porcelain has an effect of increasing the specific resistivity. However, if these ingredients are increased to exceed a certain amount, a sintered body of a dense structure cannot be obtained, so that these ingredients have to be limited to a certain range in order to achieve both of the aforedescribed electrical properties and physical properties simultaneously. In other words, there is a limit to the possible increase of these ingredients when increasing the specific resistivity of a porcelain.

The inventors prepared post insulators using porcelains which have high specific resistivity and excellent deterioration property in DC voltage in test specimens, and evaluated deterioration property of the post insulators due to DC voltage by the ion accumulation test. As a result, the inventors have found out that also the post insulators have a tendency that, the larger the specific resistivity of the porcelains is, the better the deterioration property due to DC voltage is, similarly as in the test of porcelains per se. However, this tendency is not so noticeable as compared with the tendency found in the test on specimens. Namely, it has become apparent that, specific resistivity of a porcelain can be made high, so that duration of the porcelain insulator before its breakdown (estimated life) in the ion accumulation test is prolonged, but that, if the specific resistivity reaches above a certain level, the estimated life approaches to a saturated state, and deterioration property of the porcelain insulator under DC voltage is not so improved as compared to the improvement of the specific resistivity.

In observation of insulators punctured by the ion accumulation test, one feature found is that every punctured insulator shows a crack initiating from a portion of glaze on the porcelain surface which contacts cement, i.e., a portion of glaze on the porcelain surface at which the electric current flows from a hard ware to the glaze and further to the porcelain through the cement with the estimated maximum electric current density. Another feature is that the crack develops from the glaze portion on the positive electrode. For instance, in the case of a post insulator as shown in Fig. 3, it was found out that a crack was formed starting from the portion of glaze 2a which contacts around cork 5 at the hard ware 4a of the positive electrode. Though a mechanism of breakdown or puncture of a porcelain insulator due to DC voltage has not yet been completely analyzed, it is estimated from such pattern of breakdown that a stress which breaks the porcelain insulator is related to the electric current which flows from the hard ware to the glaze through the cement and further to the porcelain.

Considering these results, the inventors have conceived two counterplans, one counterplan being an enhancement of specific resistivity of the porcelain similarly as in the result of the test of specimens, and the other counterplan being an enhancement of specific resistivity of glaze in addition to enhancement of specific resistivity of the porcelain.

Glazes of high voltage porcelain insulators have a purpose of coloring the porcelain surface and a purpose of making the porcelain surface smooth when applied thereon. Besides, they have to be so properly selected that they have appropriate physical properties such as thermal expansion coefficient, hardness, Young's modulus, tensile strength and the like relative to porcelains, as described in U.S. Patent No. 2,157,100 issued on May 9, 1939 for "Glazed Ceramic Insulator and the like". For that purpose, chemical compositions of glazes have generally less sodium oxide content and higher potassium oxide, barium oxide, magnesium oxide and calcium oxide contents as compared with vitreous components of porcelains. As a result, specific resistivities of these glazes are high as compared with specific resistivities of usual porcelains for high voltage insulators.

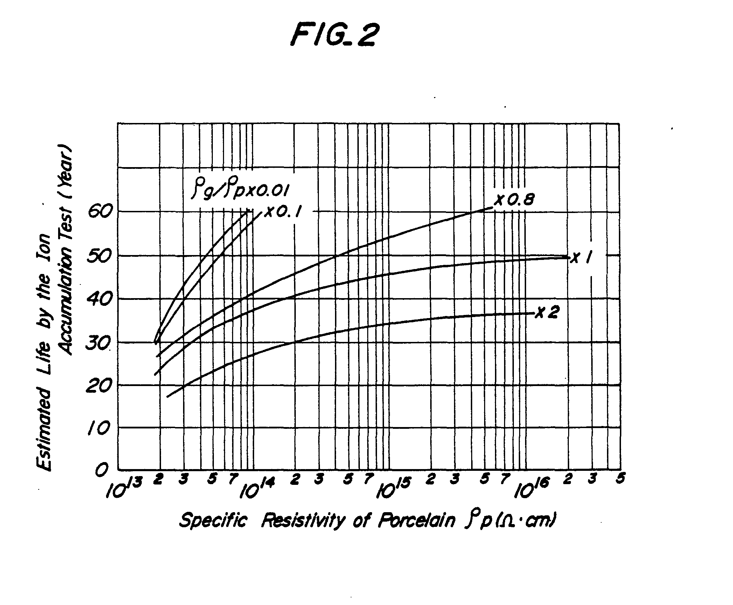

When evaluated by the ion accumulation test an insulator composed of a porcelain having a high specific resistivity and of a usual glaze having such high specific resistivity, the deterioration property of the insulator is improved to a small extent with the increase of the specific resistivity of the porcelain. However, there is seen a tendency that the effect of improving the deterioration property is saturated as shown in the attached Fig. 2 even when the specific resistivity of the porcelain is increased above a certain value, and rather there is seen a tendency that the electric properties such as power frequency puncture voltage in oil, etc. of the insulator before application of DC voltage deteriorate.

The inventors have also found that an insulator composed of a porcelain having a high specific resistivity and coated with a glaze having a higher specific resistivity than that of a usual glaze for high voltage insulator has an inferior deterioration property as compared with an insulator having a porcelain coated with a usual glaze.

The present invention obviates also the above disadvantages.

Hereinafter, the present invention will be explained in more detail with reference to Figs. 3 and 4 which show an embodiment of the present invention. In the high voltage porcelain insulator shown in Fig. 3, a porcelain body 1 has a specific resistivity $\rho_p$ of $\rho_p \geqq 5 \times 10^{13}\Omega \cdot$ cm. Surface of the porcelain body 1 has a coating of a glaze 2 which has a specific resistivity $\rho_g$ of $\rho_g < \rho_p$. The coated porcelain body 1 has been fixed between a pair of hard ware 4 through cement 3. A cork 5 is inserted as a spacer between the glaze 2 and the hard ware 4. Though a porcelain insulator of the abovementioned structure has especially good

4

resistance against breakdown due to DC voltage, it can also be used under high AC voltage. Particularly, a porcelain insulator wherein a porcelain body has a specific resistivity $\rho_p$ of

$$1.0 \times 10^{14} \Omega \cdot cm \leqq \rho_p \leqq 1.0 \times 10^{16} \Omega \cdot cm$$

and a glaze has a specific resistivity $\rho_g$ of

$$5.0 \times 10^{12} \Omega \cdot cm \leqq \rho_g \leqq 5.0 \times 10^{14} \Omega \cdot cm$$

and the glaze is so selected as $\rho_g < \rho_p$, has a remarkably superior deterioration property under DC voltage. Besides, if the glaze has a specific resistivity $\rho_g$ of $\rho_g \geqq 1.0 \times 10^{13} \Omega \cdot cm$, and a lower thermal expansion coefficient than the porcelain, the porcelain exerts a compression stress upon the glaze, so that a porcelain insulator can be obtained having improved mechanical strength. At this stage of condition, if the glaze is so selected that the specific resistivity $\rho_g$ of the glaze is lower than that of a porcelain e.g. as $\rho_g < 0.8 \rho_p$, electrical properties such as deterioration property under DC voltage and power frequency puncture voltage in oil and the like are improved, so that particularly preferable insulators can be obtained.

The type of the porcelain insulator of the invention is not limited to any specific one, but can be applied to any type of porcelain insulator such as bushing shell, long rod type insulator, disc type suspension insulator and pin type insulator.

The glaze 2 having the specific resistivity according to the present invention is not necessarily applied on the whole surface of the porcelain 1. The desired effect of the present invention can be obtained by applying this glaze as either the glaze portion 2a contacting the cement 3a or the glaze portion 2c contacting the other cement 3b. Of course, the glaze can be applied on the overall surface of the porcelain to obtain the desired effect.

Four preferred sets of ranges for the chemical composition of the porcelain of insulators according to the present invention are shown in the following Table 1. In this and the following composition tables, the numerical values are parts by weight.

TABLE 1

| Range | I | II | III | IV |
|---|---|---|---|---|
| | $35 \leqq SiO_2 \leqq 75$ | $35 \leqq SiO_2 \leqq 75$ | $35 \leqq SiO_2 \leqq 75$ | $35 \leqq SiO_2 \leqq 75$ |
| | $15 \leqq Al_2O_3 \leqq 55$ | $15 \leqq Al_2O_3 \leqq 55$ | $15 \leqq Al_2O_3 \leqq 55$ | $15 \leqq Al_2O_3 \leqq 55$ |
| $R_2O$ | $Na_2O \leqq 0.5$ | $Na_2O \leqq 0.5$ | $0.5 < Na_2O \leqq 1.0$ | $1.0 < Na_2O \leqq 1.5$ |
| | $1.5 \leqq K_2O \leqq 4.5$ | $4.5 < K_2O \leqq 7.0$ | $2.0 \leqq K_2O \leqq 7.0$ | $2.0 \leqq K_2O \leqq 7.0$ |
| RO | $BaO \leqq 7.0$ | $BaO \leqq 7.0$ | $BaO \leqq 7.0$ | $BaO \leqq 7.0$ |
| | $MgO \leqq 3.0$ | $MgO \leqq 3.0$ | $MgO \leqq 3.0$ | $MgO \leqq 3.0$ |
| | $CaO \leqq 3.0$ | $CaO \leqq 3.0$ | $CaO \leqq 3.0$ | $CaO \leqq 3.0$ |
| | $RO \leqq 7.0$ | $1.0 \leqq RO \leqq 7.0$ | $3.0 \leqq RO \leqq 7.0$ | $5.0 \leqq RO \leqq 7.0$ |
| | $4.0 \leqq (R_2O + RO) \leqq 11.0$ | $5.5 < (R_2O + RO) \leqq 11.0$ | $5.5 < (R_2O + RO) \leqq 11.0$ | $8.0 < (R_2O + RO) \leqq 11.0$ |

Notes: $R_2O = Na_2O + K_2O$
$RO = BaO + MgO + CaO$

A porcelain having a chemical composition which falls within any one of the above ranges I, II, III and IV has a specific resistivity of $5.0 \times 10^{13} \Omega \cdot cm$ or more, showing suitable property as a porcelain for high voltage porcelain insulator of the present invention.

Among the porcelains of the above ranges, the porcelains of the ranges V and VI as shown in the following Table 2 have a specific resistivity of not less than $1.0 \times 10^{14} \Omega \cdot cm$ and not over than $1.0 \times 10^{16} \Omega \cdot cm$, and have excellent properties both electrically and mechanically when used as porcelains for high voltage porcelain insulators.

# 0 119 838

TABLE 2

| Range | | V | VI |
|-------|---|---|-----|
| | | $35 \leqq SiO_2 \leqq 75$ <br><br> $15 \leqq Al_2O_3 \leqq 55$ | $35 \leqq SiO_2 \leqq 75$ <br><br> $15 \leqq Al_2O_3 \leqq 55$ |
| | $R_2O$ | $0.2 \leqq Na_2O \leqq 1.0$ <br><br> $2.0 \leqq K_2O \leqq 5.5$ | $0.2 \leqq Na_2O \leqq 0.4$ <br><br> $2.0 \leqq K_2O \leqq 4.5$ |
| | RO | $3.0 \leqq BaO \leqq 7.0$ <br><br> $MgO \leqq 1.0$ <br><br> $CaO \leqq 1.0$ | $BaO \leqq 7.0$ <br><br> $MgO \leqq 1.0$ <br><br> $CaO \leqq 1.0$ |
| | | $3.0 \leqq RO \leqq 7.0$ <br><br> $5.2 \leqq (R_2O + RO) \leqq 11.0$ | $RO \leqq 7.0$ <br><br> $4.0 \leqq (R_2O + RO) \leqq 11.0$ |

The glaze used in the porcelain insulator of the present invention preferably has a chemical composition falling within one of the preferred sets of ranges shown in the following Table 3.

TABLE 3

| Range | | I | II | III |
|-------|---|---|----|-----|
| | | $60 \leqq SiO_2 \leqq 75$ <br><br> $10 \leqq Al_2O_3 \leqq 20$ <br><br> $1.0 \leqq Na_2O \leqq 3.0$ <br><br> $5.0 \leqq K_2O \leqq 10.0$ | $60 \leqq SiO_2 \leqq 75$ <br><br> $15 \leqq Al_2O_3 \leqq 23$ <br><br> $0.5 \leqq Na_2O \leqq 3.0$ <br><br> $1.0 \leqq K_2O \leqq 5.0$ | $60 \leqq SiO_2 \leqq 70$ <br><br> $16 \leqq Al_2O_3 \leqq 21$ <br><br> $0.5 \leqq Na_2O \leqq 1.6$ <br><br> $2.0 \leqq K_2O \leqq 5.0$ |
| | RO | $BaO \leqq 1.0$ <br><br> $1.0 \leqq MgO \leqq 4.0$ <br><br> $1.0 \leqq CaO \leqq 4.0$ | $BaO \leqq 1.0$ <br><br> $5.0 \leqq MgO \leqq 8.0$ <br><br> $0.2 \leqq CaO \leqq 1.0$ | $BaO \leqq 1.0$ <br><br> $6.0 \leqq MgO \leqq 8.0$ <br><br> $0.2 \leqq CaO \leqq 0.7$ |
| | | $3.0 \leqq RO \leqq 8.0$ | $6.0 \leqq RO \leqq 9.0$ | $6.5 \leqq RO \leqq 8.0$ |

The glazes of either one of the ranges I or II have a specific resistivity of $1.0 \times 10^{15} \Omega \cdot cm$ or less, and can be selected in combination with a porcelain of the present invention depending on a specific resistivity of the porcelain to be used. Besides, the glaze of the range II produces cordierite crystals during the firing and cooling process, so that thermal expansion coefficient of the glaze becomes low. Furthermore, by varying the content of sodium oxide in the range III, a glaze can be obtained which has a specific resistivity $\rho_g$ of $\rho_g \geqq 1.0 \times 10^{13} \Omega \cdot cm$ and a low thermal expansion coefficient owing to production of cordierite crystals as well as exceedingly smooth and lustrous surface.

Hereinafter, advantageous effects of the high voltage porcelain insulator of the present invention will be explained with reference to Examples. In Examples, all percentages are shown by weight basis, unless otherwise specified.

Example 1

10% of alumina, 20% of silica sand, 30% of feldspar-A and 40% of clay are ground in wet process to prepare a body slip containing 45% of water. The body slip is dewatered, extruded through de-airing pugmill, dried and then sintered in air at a maximum temperature of 1,280°C for 1 hour to obtain sample No. P1 for measuring a specific resistivity by a ceramic material testing method (JIS C2141 according to Japanese Industrial Standard) and for measuring dielectric breakdown voltage by a ceramic dielectric

6

material testing method according to DIN (VDE0335/7.56). The materials used herein have a chemical composition as shown in the following Table 4.

TABLE 4

| Materials | Chemical composition (%) | | | | | | | |
|---|---|---|---|---|---|---|---|---|
| | $SiO_2$ | $Al_2O_3$ | CaO | MgO | BaO | $K_2O$ | $Na_2O$ | Ig. loss |
| Alumina | 0.02 | 99.76 | 0.01 | 0.01 | — | 0.00 | 0.18 | 0.68 |
| Silica sand | 97.92 | 0.92 | 0.05 | 0.04 | — | 0.32 | 0.03 | 0.62 |
| Feldspar-A | 67.42 | 16.87 | 0.06 | 0.03 | — | 13.58 | 0.81 | 0.95 |
| Feldspar-B | 67.84 | 18.35 | 0.46 | 0.03 | — | 9.65 | 2.89 | 0.72 |
| Feldspar-C | 78.45 | 12.71 | 0.58 | 0.03 | — | 0.66 | 6.09 | 0.66 |
| Talc | 61.89 | 0.10 | 0.08 | 31.62 | — | 0.01 | 0.01 | 5.33 |
| Dolomite | 1.52 | 0.14 | 35.21 | 18.06 | — | 0.03 | 0.01 | 44.83 |
| Barium carbonate | — | — | — | — | 77.58 | — | — | 22.38 |
| Clay | 50.86 | 34.76 | 0.42 | 0.13 | — | 1.47 | 0.18 | 11.52 |

In the same way as in the above sample No. P1, porcelains having compositions shown in the following Table 5 are prepared and numbered as sample Nos. P2—P21. On these porcelains are measured chemical composition, sintering property, specific resistivity at 25°C according to JIS C2141 method, dielectric breakdown voltage according to DIN VDE0335/7.56. The dielectric breakdown voltage is also measured after an application of DC voltage of 4 kv per one sample in an isothermal tank of 160°C for 15 days and rate of the variation (in this case, rate of decrease) of the dielectric breakdown voltage from the initial breakdown voltage is obtained. The results are summarized in the following Table 5 in addition to the results of the abovementioned sample No. P1. In the sintering property of the porcelains shown in the Table 5, the symbol $A$ means an adequately sintered state because penetration of a dye into the fired porcelain is not seen in a dyeing penetration test and besides a bubble cannot be recognized on a cross-section of the fired porcelain by a naked eye, the symbol $B$ shows an insufficiently sintered state of a porcelain because penetration of a dye into the fired porcelain is seen in a dyeing penetration test, and the symbol $C$ shows oversintered state of a porcelain because minute bubbles are recognized on a cross-section of the fired porcelain by a naked eye.

TABLE 5(a)

| Sample No. | | P1 | P2 | P3 | P4 | P5 | P6 | P7 | P8 | P9 | P10 |
|---|---|---|---|---|---|---|---|---|---|---|---|
| Batch composition (wt%) | Alumina | 20 | 20 | 20 | 20 | 10 | 10 | 10 | 10 | 10 | 10 |
| | Silica sand | 10 | 10 | 10 | 20 | 20 | 20 | 20 | 20 | 20 | 20 |
| | Feldspar-A | 30 | 15 | 0 | 21 | 30 | 29 | 28 | 26 | 24 | 20 |
| | Feldspar-B | 0 | 15 | 30 | 0 | 0 | 0 | 0 | 0 | 0 | 0 |
| | Talc | 0 | 0 | 0 | 0 | 0 | 0 | 0 | 0 | 0 | 2 |
| | Dolomite | 0 | 0 | 0 | 0 | 0 | 0 | 0 | 0 | 0 | 2 |
| | Barium carbonate | 0 | 0 | 0 | 4 | 0 | 1 | 2 | 4 | 6 | 6 |
| | Clay | 40 | 40 | 40 | 35 | 40 | 40 | 40 | 40 | 40 | 40 |
| Chemical composition (wt%) | $SiO_2$ | 52.2 | 53.1 | 52.2 | 52.9 | 61.8 | 62.5 | 61.5 | 61.7 | 60.7 | 58.1 |
| | $Al_2O_3$ | 41.2 | 39.9 | 41.6 | 36.1 | 31.3 | 29.8 | 30.1 | 28.9 | 29.2 | 29.4 |
| | $Na_2O$ $\left.\right\} R_2O$ | 0.6 | 0.7 | 1.0 | 0.3 | 0.6 | 0.3 | 0.3 | 0.3 | 0.3 | 0.3 |
| | $K_2O$ | 4.7 | 4.4 | 3.7 | 3.4 | 5.1 | 4.9 | 4.7 | 4.2 | 3.9 | 3.6 |
| | $BaO$ $\left.\right\} RO$ | 0.0 | 0.0 | 0.0 | 3.2 | 0.0 | 0.7 | 1.7 | 3.3 | 4.5 | 5.1 |
| | $MgO$ | 0.1 | 0.1 | 0.1 | 0.1 | 0.1 | 0.1 | 0.1 | 0.1 | 0.1 | 0.9 |
| | $CaO$ | 0.2 | 0.3 | 0.3 | 0.2 | 0.2 | 0.2 | 0.2 | 0.2 | 0.2 | 1.0 |
| | $RO$ | 0.3 | 0.4 | 0.4 | 3.5 | 0.3 | 1.0 | 2.0 | 3.6 | 4.8 | 7.0 |
| | $R_2O+RO$ | 5.6 | 5.5 | 5.1 | 7.2 | 6.0 | 6.2 | 7.0 | 8.1 | 9.0 | 10.9 |
| Sintering property of porcelain | | A | A | A | A | A | A | A | A | A | A |
| Specific resistivity of porcelain ($\Omega \cdot$ cm) 25°C | | $2.2\times10^{13}$ | $2.4\times10^{12}$ | $1.8\times10^{11}$ | $3.2\times10^{14}$ | $2.6\times10^{13}$ | $5.2\times10^{13}$ | $7.7\times10^{13}$ | $2.1\times10^{14}$ | $6.3\times10^{14}$ | $9.0\times10^{15}$ |
| Dielectric breakdown voltage (kv/mm) | Initial value | 41.3 | 38.5 | 40.6 | 42.1 | 43.8 | 46.4 | 45.4 | 46.6 | 45.3 | 27.2 |
| | After application of DC voltage | 35.9 | thermal runaway | thermal runaway | 37.9 | 36.8 | 44.7 | 42.5 | 45.9 | 44.7 | 27.1 |
| | Rate of decrease (%) | 13.1 | — | — | 10.0 | 16.0 | 3.7 | 6.4 | 1.5 | 1.3 | 0.4 |

TABLE 5(b)

| Sample No. | | P11 | P12 | P13 | P14 | P15 | P16 | P17 | P18 | P19 | P20 | P21 |
|---|---|---|---|---|---|---|---|---|---|---|---|---|
| Batch composition (wt%) | Alumina | 10 | 20 | 20 | 20 | 20 | 30 | 30 | 30 | 30 | 20 | 20 |
| | Silica sand | 30 | 15 | 15 | 24 | 22 | 5 | 10 | 5 | 5 | 20 | 25 |
| | Feldspar-A | 18 | 28 | 28 | 15 | 20 | 29 | 20 | 21 | 21 | 18 | 15 |
| | Feldspar-B | 0 | 0 | 0 | 0 | 0 | 0 | 0 | 0 | 0 | 0 | 0 |
| | Talc | 0 | 2 | 0 | 3 | 2 | 2 | 5 | 5 | 5 | 2 | 0 |
| | Dolomite | 0 | 0 | 2 | 4 | 2 | 2 | 2 | 5 | 5 | 0 | 0 |
| | Barium carbonate | 2 | 0 | 0 | 4 | 4 | 2 | 3 | 6 | 4 | 0 | 0 |
| | Clay | 40 | 35 | 35 | 30 | 30 | 30 | 30 | 30 | 30 | 40 | 40 |
| Chemical composition (wt%) | $SiO_2$ | 64.3 | 54.2 | 54.5 | 53.8 | 54.5 | 42.5 | 44.0 | 38.4 | 40.2 | 55.7 | 57.7 |
| | $Al_2O_3$ | 29.1 | 38.6 | 38.6 | 34.7 | 35.4 | 47.3 | 45.8 | 46.5 | 46.6 | 38.8 | 37.7 |
| | $Na_2O$ $\}R_2O$ | 0.3 | 0.3 | 0.3 | 0.2 | 0.3 | 0.4 | 0.3 | 0.3 | 0.3 | 0.3 | 0.2 |
| | $K_2O$ | 3.2 | 4.7 | 4.3 | 3.0 | 3.4 | 4.8 | 3.3 | 3.8 | 3.7 | 3.2 | 2.9 |
| | BaO $\}RO$ | 1.7 | 0.0 | 0.0 | 3.4 | 3.3 | 1.7 | 2.5 | 5.2 | 3.2 | 0.0 | 0.0 |
| | MgO | 0.1 | 0.8 | 0.5 | 1.8 | 0.9 | 0.9 | 2.1 | 2.6 | 2.6 | 0.6 | 0.1 |
| | CaO | 0.2 | 0.3 | 0.7 | 1.7 | 0.9 | 0.9 | 0.9 | 2.0 | 2.0 | 0.2 | 0.2 |
| | RO | 2.0 | 1.1 | 1.2 | 6.9 | 5.1 | 3.5 | 5.5 | 9.8 | 7.8 | 0.8 | 0.3 |
| | $R_2O+RO$ | 5.5 | 6.1 | 5.8 | 10.1 | 8.8 | 8.7 | 9.1 | 13.9 | 11.8 | 4.3 | 3.4 |
| Sintering property of porcelain | | A | A | A | A | A | A | A | C | C | A | B |
| Specific resistivity of porcelain ($\Omega \cdot cm$) 25°C | | $1.3\times10^{14}$ | $7.5\times10^{13}$ | $1.1\times10^{14}$ | $1.8\times10^{16}$ | $3.2\times10^{15}$ | $5.4\times10^{14}$ | $7.2\times10^{15}$ | $1.7\times10^{17}$ | $4.2\times10^{16}$ | $1.5\times10^{14}$ | X |
| Dielectric breakdown voltage (kv/mm) | Initial value | 44.5 | 41.9 | 42.8 | 37.3 | 38.1 | 36.2 | 32.6 | 18.3 | 27.8 | 36.5 | X |
| | After application of DC voltage | 42.7 | 40.1 | 40.7 | 37.1 | 38.0 | 36.0 | 32.5 | 18.2 | 27.6 | 36.4 | X |
| | Rate of decrease (%) | 4.0 | 4.3 | 4.9 | 0.5 | 0.3 | 0.6 | 0.3 | 0.5 | 0.7 | 0.3 | X |

Note: X shows that the test was not conducted.

From the chemical compositions of the porcelains shown in Table 5, a tendency is observed that a specific resistivity of a porcelain increases with decrease of sodium oxide content in the porcelain or with increase of potassium oxide content, barium oxide content, magnesium oxide content and calcium oxide content in the porcelain. The alkali metal components and the alkaline earth metal components are closely related to the sintering property of the porcelain. If the sum of these components is low, a tendency to insufficient sintering occurs, while if the sum is high, a tendency to oversintering occurs. Taking the desired sintering property and the specific resistivity of the porcelains into consideration, preferably the porcelain has a composition of 1.5% or less of sodium oxide, 7.0% or less of potassium oxide, 7.0% or less of barium oxide, 3.0% or less of magnesium oxide and 3.0% or less of calcium oxide, the sum of these components being 4—11.0%.

When comparing rates of decrease of dielectric breakdown voltage of these porcelains due to DC voltage, a tendency is noted that as a whole a porcelain of a larger specific resistivity has less rate of decrease of dielectric breakdown voltage. However, if the specific resistivity is increased to more than $10^{16} \Omega \cdot cm$ by increasing the alkaline earth metal components, the initial value of dielectric breakdown voltage becomes low. From this phenomenon it is estimated that the dielectric breakdown voltage has a relation to the sintering property of the porcelains. The values of rate of decrease in % of dielectric breakdown voltage relative to specific resistivity $\rho_p$ in $\Omega \cdot cm$ of the porcelain in Table 5 are plotted in attached Fig. 1.

Using the same materials as those shown in Table 4, glazes for applying on surface of insulators are prepared based on compositions as shown in the following Table 6. The glazes are allotted sample Nos. G1—G18, and their chemical compositions and specific resistivities measured at 25°C according to JIS C2141 method are also shown in Table 6.

10

TABLE 6(a)

| Sample No. | | G1 | G2 | G3 | G4 | G5 | G6 | G7 | G8 | G9 |
|---|---|---|---|---|---|---|---|---|---|---|
| Batch composition (wt%) | Alumina | 0 | 0 | 0 | 0 | 0 | 10 | 10 | 10 | 10 |
| | Silica sand | 2 | 22 | 22 | 22 | 30 | 20 | 20 | 30 | 31 |
| | Feldspar-A | 0 | 0 | 10 | 10 | 10 | 0 | 0 | 0 | 0 |
| | Feldspar-B | 83 | 63 | 53 | 50 | 46 | 35 | 30 | 29 | 23 |
| | Feldspar-C | 0 | 0 | 0 | 3 | 0 | 5 | 10 | 0 | 5 |
| | Talc | 2 | 0 | 0 | 0 | 0 | 19 | 19 | 21 | 20 |
| | Dolomite | 6 | 8 | 8 | 8 | 7 | 1 | 1 | 0 | 1 |
| | Barium carbonate | 0 | 0 | 0 | 0 | 0 | 0 | 0 | 0 | 0 |
| | Clay | 7 | 7 | 7 | 7 | 7 | 10 | 10 | 10 | 10 |
| Chemical composition (wt%) | $SiO_2$ | 65.5 | 70.6 | 70.1 | 71.0 | 73.6 | 65.6 | 66.5 | 68.6 | 68.9 |
| | $Al_2O_3$ | 17.9 | 14.4 | 14.9 | 14.4 | 13.3 | 21.0 | 20.6 | 19.3 | 18.8 |
| | $Na_2O$ $R_2O$ | 2.5 | 1.9 | 1.8 | 1.8 | 1.4 | 1.4 | 1.6 | 0.9 | 1.1 |
| | $K_2O$ | 8.6 | 6.8 | 7.2 | 6.6 | 6.3 | 3.8 | 3.2 | 2.9 | 2.5 |
| | BaO | 0.0 | 0.0 | 0.0 | 0.0 | 0.0 | 0.0 | 0.0 | 0.0 | 0.0 |
| | MgO RO | 1.7 | 1.7 | 1.7 | 1.6 | 1.4 | 6.3 | 6.2 | 6.8 | 6.8 |
| | CaO | 2.5 | 3.4 | 3.2 | 3.4 | 2.9 | 0.6 | 0.6 | 0.2 | 0.6 |
| | RO | 4.2 | 5.1 | 4.9 | 5.0 | 4.3 | 6.9 | 6.8 | 7.0 | 7.4 |
| | $R_2O+RO$ | 15.3 | 13.8 | 13.9 | 13.4 | 12.0 | 12.1 | 11.6 | 10.8 | 11.0 |
| Specific resistivity of glaze ($\Omega \cdot cm$) 25°C | | $3.6 \times 10^{11}$ | $2.3 \times 10^{12}$ | $4.6 \times 10^{12}$ | $3.0 \times 10^{12}$ | $5.2 \times 10^{12}$ | $4.1 \times 10^{13}$ | $1.2 \times 10^{13}$ | $1.5 \times 10^{14}$ | $6.3 \times 10^{13}$ |

0 119 838

TABLE 6(b)

| Sample No. | | G10 | G11 | G12 | G13 | G14 | G15 | G16 | G17 | G18 |
|---|---|---|---|---|---|---|---|---|---|---|
| Batch composition (wt%) | Alumina | 10 | 10 | 10 | 10 | 10 | 7 | 6 | 6 | 6 |
| | Silica sand | 20 | 30 | 30 | 31 | 20 | 44 | 44 | 46 | 43 |
| | Feldspar-A | 0 | 0 | 4 | 3 | 13 | 0 | 0 | 4 | 4 |
| | Feldspar-B | 32 | 22 | 20 | 25 | 25 | 20 | 20 | 15 | 15 |
| | Feldspar-C | 6 | 7 | 5 | 0 | 0 | 0 | 0 | 0 | 0 |
| | Talc | 21 | 21 | 21 | 20 | 21 | 2 | 0 | 0 | 1 |
| | Dolomite | 1 | 0 | 0 | 1 | 1 | 8 | 8 | 10 | 5 |
| | Barium carbonate | 0 | 0 | 0 | 0 | 0 | 7 | 10 | 7 | 14 |
| | Clay | 10 | 10 | 10 | 10 | 10 | 12 | 12 | 12 | 12 |
| Chemical composition (wt%) | $SiO_2$ | 65.6 | 69.2 | 69.1 | 68.6 | 65.2 | 68.9 | 67.1 | 69.6 | 66.0 |
| | $Al_2O_3$ | 20.6 | 18.8 | 19.1 | 19.0 | 20.8 | 15.4 | 15.2 | 14.6 | 14.9 |
| | $Na_2O$ $\left.\right\}R_2O$ | 1.5 | 1.1 | 1.0 | 0.8 | 0.9 | 0.7 | 0.7 | 0.6 | 0.6 |
| | $K_2O$ | 3.3 | 2.4 | 2.9 | 3.3 | 4.4 | 2.5 | 2.6 | 2.3 | 2.3 |
| | $BaO$ | 0.0 | 0.0 | 0.0 | 0.0 | 0.0 | 5.9 | 8.5 | 6.1 | 12.1 |
| | $MgO$ $\left.\right]RO$ | 7.2 | 6.9 | 6.7 | 6.6 | 6.8 | 2.2 | 1.4 | 1.9 | 1.3 |
| | $CaO$ | 0.6 | 0.2 | 0.2 | 0.7 | 0.6 | 3.2 | 3.3 | 3.8 | 1.8 |
| | $RO$ | 7.8 | 7.1 | 6.9 | 7.3 | 7.4 | 11.3 | 13.2 | 11.8 | 15.2 |
| | $R_2O+RO$ | 12.6 | 10.6 | 10.8 | 11.4 | 12.7 | 14.5 | 16.5 | 14.7 | 18.1 |
| Specific resistivity of glaze ($\Omega \cdot cm$) 25°C | | $4.6 \times 10^{13}$ | $3.2 \times 10^{13}$ | $8.2 \times 10^{13}$ | $4.7 \times 10^{14}$ | $6.1 \times 10^{14}$ | $5.8 \times 10^{15}$ | $7.3 \times 10^{15}$ | $1.6 \times 10^{16}$ | $2.3 \times 10^{16}$ |

0 119 838

Mixtures of the raw materials of the desired compositions are ground in wet process to produce glaze slips of a water content of 50%. The slips are dewatered on a gypsum board, dried and then fired in the same condition as the porcelains to prepare glaze samples for measuring the specific resistivity according to JIS C2141 method.

From the Table 6 a tendency is seen that glazes to be used for high voltage porcelain insulators have usually higher alkaline earth metals content as compared with the porcelains and have high specific resistivity. Furthermore, similarly as in the case of specific resistivity of the porcelains, a tendency is observed that the specific resistivity of glazes becomes low when the content of sodium oxide becomes high. Particularly, the glazes of sample Nos. G6—G14 exhibit excellent properties as glazes for applying on high voltage porcelain insulators, because they form cordierite crystals therein during the firing and cooling process and they have low thermal expansion coefficient as well as low specific resistivity despite the high content of magnesium oxide therein. Therefore, they are particularly preferable as glazes used in the present invention.

Post insulators as shown in Fig. 3 are produced by applying glazes of Table 6 on the porcelains of Table 5. Each post insulators is prepared so that it has, after firing, a total length of 80 mm, a porcelain thickness between hard wares of 20 mm, a diameter of holes for the hard wares of 60 mm and a thickness of glaze of 0.20—0.40 mm. Ion accumulation test is conducted at a condition of an ambient temperature of 220°C and an applied voltage of 4 kv per one post insulator to calculate estimated life of the post insulators. The results are shown in the following Table 7.

13

TABLE 7(a)

| | Sample of the present invention | | | | | | | | | |
|---|---|---|---|---|---|---|---|---|---|---|
| Sample No. | I1 | I2 | I3 | I4 | I5 | I6 | I7 | I8 | I9 | I10 |
| Porcelain sample No. | P6 | | P11 | | P16 | | P17 | | P14 | |
| Specific resistivity of porcelain $\rho_p$ ($\Omega \cdot$ cm) 25°C | $5.2\times10^{13}$ | | $1.3\times10^{14}$ | | $5.4\times10^{14}$ | | $7.2\times10^{15}$ | | $1.8\times10^{16}$ | |
| Glaze sample No. | G1 | G3 | G11 | G9 | G11 | G9 | G9 | G15 | G9 | G17 |
| Specific resistivity of glaze $\rho_g$ ($\Omega \cdot$ cm) 25°C | $3.6\times10^{11}$ | $4.6\times10^{12}$ | $3.2\times10^{13}$ | $6.3\times10^{13}$ | $3.2\times10^{13}$ | $6.3\times10^{13}$ | $6.3\times10^{13}$ | $5.8\times10^{15}$ | $6.3\times10^{13}$ | $1.6\times10^{16}$ |
| Ratio of specific resistivity of glaze relative to specific resistivity of porcelain (%) | 0.7 | 9 | 25 | 48 | 6 | 12 | 0.9 | 81 | 0.4 | 89 |
| Resistance value of insulator R($\Omega$) 25°C | $3.4\times10^{12}$ | $3.3\times10^{12}$ | $8.6\times10^{12}$ | $8.7\times10^{12}$ | $3.4\times10^{13}$ | $3.5\times10^{13}$ | $4.1\times10^{14}$ | $4.1\times10^{14}$ | $9.6\times10^{14}$ | $9.8\times10^{14}$ |
| Temperature coefficient of resistance value K | 9,040 | 9,060 | 9,320 | 9,350 | 9,560 | 9,510 | 9,980 | 9,930 | 10,040 | 10,150 |
| Ion accumulation test Amount of electric charge equivalent to 50 years $C_0$ (coulomb) | 130 | 134 | 54 | 53 | 14 | 13 | 1.2 | 1.2 | 0.52 | 0.52 |
| Amount of electric charge until breakdown $C_1$ (coulomb) | >130 | >134 | >54 | >53 | >14 | >13 | >1.2 | >1.2 | >0.52 | >0.52 |
| Estimated life (years) | >50 | >50 | >50 | >50 | >50 | >50 | >50 | >50 | >50 | >50 |

TABLE 7(b)

| | Reference sample | | | | | |
|---|---|---|---|---|---|---|
| Sample No. | I11 | I12 | I13 | I14 | I15 | I16 |
| Porcelain sample No. | P1 | | P11 | P16 | P17 | P14 |
| Specific resistivity of porcelain $\rho_p(\Omega \cdot cm)$ 25°C | $2.2\times10^{13}$ | | $1.3\times10^{14}$ | $5.4\times10^{14}$ | $7.2\times10^{15}$ | $1.8\times10^{16}$ |
| Glaze sample No. | G1 | G11 | G8 | G14 | G16 | G18 |
| Specific resistivity of glaze $\rho_g(\Omega \cdot cm)$ 25°C | $3.6\times10^{11}$ | $3.2\times10^{13}$ | $1.5\times10^{14}$ | $6.1\times10^{14}$ | $7.3\times10^{15}$ | $2.3\times10^{16}$ |
| Ratio of specific resistivity of glaze relative to specific resistivity of porcelain (%) | 1.6 | 145 | 115 | 113 | 101 | 128 |
| Resistance value of insulator $R(\Omega)$ 25°C | $1.2\times10^{12}$ | $1.2\times10^{12}$ | $8.6\times10^{12}$ | $3.3\times10^{13}$ | $4.0\times10^{14}$ | $9.6\times10^{14}$ |
| Temperature coefficient of resistance value K | 8,750 | 8,730 | 9,350 | 9,490 | 9,970 | 10,070 |
| Ion accumulation test Amount of electric charge equivalent to 50 years $C_0$ (coulomb) | 354 | 353 | 53 | 13 | 1.2 | 0.52 |
| Amount of electric charge until breakdown $C_1$ (coulomb) | 234 | .127 | 40 | 11 | 1.1 | 0.46 |
| Estimated life (years) | 33 | 18 | 38 | 42 | 46 | 44 |

The relation of the estimated life (years) to the specific resistivity $\rho_p(\Omega \cdot cm)$ of the porcelain shown in the above Table 7 is also illustrated in attached Fig. 2.

As seen from the above Table 7 all the samples Nos. I1—I10 wherein the combinations of the specific resistivity of porcelain and the specific resistivity of glaze are within the range of the present invention exhibit noticeably excellent results showing estimated life of more than 50 years in the ion accumulation test.

In contrast, reference samples Nos. I11—I12 prepared for comparison have specific resistivity of porcelain of lower than $5.0 \times 10^{13}\Omega \cdot cm$ and estimated lives thereof in the ion accumulation test are less than 50 years regardless whether the specific resistivity of glaze is higher or lower than the specific resistivity of porcelain. Also, referential sample Nos. I13—I16 of the insulators wherein glazes having higher specific resistivity than that of porcelains are applied on the porcelains have no remarkable effect and estimated lives thereof in the ion accumulation test do not reach 50 years, even though the porcelains used have a specific resistivity of more than $5.0 \times 10^{13}\Omega \cdot cm$.

Example 2

Porcelain sample Nos. P6, P10, P11, P14, P15 and P19 of the compositions shown in Table 5 are prepared and shaped in the same way as in Example 1 and applied with glaze sample Nos. G2, G5, G6, G7, G8, G10, G12, G13, G15, G16 and G18 of the compositions shown in Table 6 and fired and thereafter bonded with hard wares with the aid of cement to form post insulators as shown in Figs. 3 and 4. These post insulators are shown as sample Nos. I17—I31 in the following Table 8.

Power frequency puncture tests in oil and temperature cycle test according to JIS C3810, ion accumulation tests, and power frequency puncture tests in oil after the ion accumulation test, are conducted on these post insulators. The results are shown in the following Table 8. The ion accumulation test is effected at an ambient temperature of 220°C with an applied voltage of 5 kv per one insulator. When the post insulators are not punctured even when the amount of electric charge reach to a specified value which corresponds to an amount of electric charge of during 50 years in the ion accumulation tests, the ion accumulation tests are interrupted and power frequency puncture voltage in oil is measured to evaluate the deterioration property by comparing it with the value of the power frequency puncture voltage in oil obtained before conducting the ion accumulation test. These results are also shown in Table 8.

TABLE 8(a)

| Sample No. | I17 | I18 | I19 | I20 | I21 | I22 | I23 |
|---|---|---|---|---|---|---|---|
| Porcelain sample No. | P6 | | | | | P11 | |
| Specific resistivity of porcelain $\rho_p(\Omega \cdot cm)$ 25°C | $5.2 \times 10^{13}$ | | | | | $1.3 \times 10^{14}$ | |
| Glaze sample No. | G2 | G5 | G7 | G6 | G10 | G6 | G12 |
| Specific resistivity of glaze $\rho_g(\Omega \cdot cm)$ 25°C | $2.3 \times 10^{12}$ | $5.2 \times 10^{12}$ | $1.2 \times 10^{13}$ | $4.1 \times 10^{13}$ | $4.6 \times 10^{13}$ | $4.1 \times 10^{13}$ | $8.2 \times 10^{13}$ |
| Ratio of specific resistivity of glaze relative to specific resistivity of porcelain (%) | 4 | 10 | 23 | 79 | 88 | 32 | 63 |
| Resistance value of insulator $R(\Omega)$ 25°C | $3.3 \times 10^{12}$ | $3.3 \times 10^{12}$ | $3.4 \times 10^{12}$ | $3.3 \times 10^{12}$ | $3.4 \times 10^{12}$ | $8.8 \times 10^{12}$ | $8.6 \times 10^{12}$ |
| Temperature coefficient of resistance value K | 9,120 | 9,070 | 9,060 | 9,110 | 9,180 | 9,450 | 9,470 |
| Temperature difference in temperature cycle test (°C) | 70 | 80 | >90 | >90 | >90 | >90 | >90 |
| Power frequency puncture voltage in oil (kv) | 283 | 280 | 284 | 279 | 262 | 292 | 286 |
| Ion accumulation test<br>Amount of the electric charge corresponding to 50 years $C_0$ (coulomb) | 135 | 133 | 130 | 135 | 131 | 53 | 54 |
| Amount of the electric charge until breakdown $C_1$ (coulomb) | >135 | >133 | >130 | >135 | >131 | >53 | >54 |
| Estimated life (years) | >50 | >50 | >50 | >50 | >50 | >50 | >50 |
| Power frequency puncture voltage after ion accumulation test (kv) | 275 | 272 | 273 | 262 | 238 | 290 | 285 |
| Rate of decrease (%) | 2.8 | 2.9 | 3.9 | 6.1 | 9.2 | 0.7 | 0.3 |

TABLE 8(b)

| Sample No. | I24 | I25 | I26 | I27 | I28 | I29 | I30 | I31 |
|---|---|---|---|---|---|---|---|---|
| Porcelain sample No. | P15 | | P10 | | | | P14 | P19 |
| Specific resistivity of porcelain $\rho_p(\Omega \cdot cm)$ 25°C | $3.2 \times 10^{15}$ | | $9.0 \times 10^{15}$ | | | | $1.8 \times 10^{16}$ | $4.2 \times 10^{16}$ |
| Glaze sample No. | G6 | G12 | G8 | G13 | G15 | G16 | G15 | G18 |
| Specific resistivity of glaze $\rho_g(\Omega \cdot cm)$ 25°C | $4.1 \times 10^{13}$ | $8.2 \times 10^{13}$ | $1.5 \times 10^{14}$ | $4.7 \times 10^{14}$ | $5.8 \times 10^{15}$ | $7.3 \times 10^{15}$ | $6.1 \times 10^{14}$ | $2.3 \times 10^{16}$ |
| Ratio of specific resistivity of glaze relative to specific resistivity of porcelain (%) | 1.3 | 2.6 | 1.7 | 5 | 64 | 81 | 3 | 55 |
| Resistance value of insulator $R(\Omega)$ 25°C | $1.9 \times 10^{14}$ | $2.0 \times 10^{14}$ | $5.8 \times 10^{14}$ | $5.6 \times 10^{14}$ | $5.7 \times 10^{14}$ | $5.8 \times 10^{14}$ | $9.7 \times 10^{14}$ | $2.7 \times 10^{15}$ |
| Temperature coefficient of resistance value K | 9,360 | 9,350 | 9,820 | 9,760 | 9,790 | 9,770 | 9,720 | 9,960 |
| Temperature difference in temperature cycle test (°C) | >90 | >90 | >90 | >90 | >90 | >90 | >90 | >90 |
| Power frequency puncture voltage in oil (kv) | 289 | 287 | 267 | 263 | 265 | 258 | 207 | 197 |
| Ion accumulation test<br>Amount of the electric charge corresponding to 50 years $C_0$ (coulomb) | 2.4 | 2.3 | 0.84 | 0.86 | 0.85 | 0.83 | 0.49 | 0.18 |
| Amount of the electric charge until breakdown $C_1$ (coulomb) | >2.4 | >2.3 | >0.84 | >0.86 | >0.85 | >0.83 | >0.49 | >0.18 |
| Estimated life (years) | >50 | >50 | >50 | >50 | >50 | >50 | >50 | >50 |
| Power frequency puncture voltage after ion accumulation test (kv) | 286 | 285 | 265 | 257 | 255 | 243 | 192 | 172 |
| Rate of decrease (%) | 1.0 | 0.7 | 0.7 | 2.3 | 3.8 | 5.8 | 7.2 | 12.7 |

From the results as shown in the above Table 8 the insulator sample Nos. I17—I31 wherein the porcelains have a specific resistivity $\rho_p$ of $\rho_p \geqq 5.0 \times 10^{13} \Omega \cdot cm$ and the glazes have a specific resistivity $\rho_g$ of $\rho_g < \rho_p$ have an estimated life of more than 50 years showing excellent DC deterioration property. Insulator sample Nos. I22—I29 wherein the porcelains have a specific resistivity $\rho_p$ of $1.0 \times 10^{14} \Omega \cdot cm \leqq \rho_p \leqq 1.0 \times 10^{16} \Omega \cdot cm$ and the glazes have a specific resistivity $\rho_g$ of $\rho_g < \rho_p$ have high power frequency puncture voltage in oil. Insulator sample Nos. I22—I27 wherein the porcelains have a specific resistivity $\rho_p$ of

$$1.0 \times 10^{14} \Omega \cdot cm \leqq \rho_p \leqq 1.0 \times 10^{16} \Omega \cdot cm \text{ and the glazes have a specific resistivity } \rho_g \text{ of}$$

$$5.0 \times 10^{12} \Omega \cdot cm \leqq \rho_g \leqq 5.0 \times 10^{14} \Omega \cdot cm$$

and $\rho_g < \rho_p$ have small rate of decrease of power frequency puncture voltage in oil after the ion accumulation test. Insulator sample Nos. I19, I20 and I22—I29 wherein the porcelains have a specific resistivity $\rho_p$ of $\rho_p \geqq 5 \times 10^{13} \Omega \cdot cm$ and the glazes have a specific resistivity $\rho_g$ of $\rho_g \geqq 1.0 \times 10^{13} \Omega \cdot cm$ and $\rho_g < 0.8 \times \rho_p$ have an estimated life of more than 50 years in the ion accumulation test as well as high strength in temperature cycle test. Summing up these results, porcelain insulators wherein porcelains having a specific resistivity $\rho_p$ of

$$1.0 \times 10^{14} \Omega \cdot cm \leqq \rho_p \leqq 1.0 \times 10^{16} \Omega \cdot cm \text{ are combined with glazes having a specific resistivity } \rho_g \text{ of}$$

$$1.0 \times 10^{13} \Omega \cdot cm \leqq \rho_g \leqq 5.0 \times 10^{14} \Omega \cdot cm$$

and $\rho_g < 0.8 \times \rho_p$ have superior properties in the ion accumulation test and excellent thermal resistivity in the temperature cycle test, so that they are particularly preferable as porcelain insulators for high voltage DC.

Example 3

Porcelain sample No. P4 of the composition as shown in Table 5 is prepared in the same way as in Example 1 for producing post insulators as shown in Fig. 3 having a total length of 140 mm, porcelain thickness between hard wares of 44 mm and a diameter of holes for the hard wares of 60 mm. Also, disc type suspension insulators according to U.S. standard, ANSI Class 52-5, are prepared. The porcelains are glazed with glaze No. G6 or No. G13 of compositions as shown in Table 6 so that the glaze has a thickness of 0.20—0.40 mm after firing, the glazes being applied on the porcelains in combinations as shown in the following Table 9 at different portions of the porcelains e.g. at three glaze portions i.e. a glaze portion 2a which contacts with cement 3a, a glaze portion 2b which is exposed to exterior and a glaze portion 2c which contacts with another cement 3b, as shown in Fig. 3. The resultant porcelains having different portions of glazes are fired, bonded to the hard wares with the aid of cement to produce insulator sample Nos. I32—I38 as shown in Table 9. Among these samples, insulator Nos. I32—I36 are post insulators as shown in Fig. 3, wherein Nos. I32—I35 are post insulators composed of the porcelains and the glazes according to the present invention, and No. I36 is prepared as a reference sample for comparison. Insulator sample Nos. I37 and I38 are disc type suspension insulators of the present invention.

Ion accumulation tests are performed on these porcelain insulators, using the hard ware 4a or 4b as a positive electrode, to compare the deterioration property due to DC voltage. The results are shown also in Table 9. Ion accumulation tests are effected at an ambient temperature of 220°C and an application voltage of DC 10 kv per one porcelain insulator. When the porcelain insulators are not punctured at the amount of the accumulated charge which corresponds to 50 years, the applied voltage is interrupted and power frequency puncture voltage in oil is measured.

TABLE 9(a)

| | Sample of the present invention | | | |
|---|---|---|---|---|
| Sample No. | I32 | J33 | I34 | I35 |
| Porcelain sample No. | P4 | | | |
| Specific resistivity of porcelain $\rho_p(\Omega \cdot cm)$ | $3.2 \times 10^{14}$ | | | |
| **Glaze**<br>Portion 2a at hard ware 4a  Sample No.<br>Specific resistivity $\rho_g(\Omega \cdot cm)$ 25°C | G6<br>$4.1 \times 10^{13}$ | G6<br>$4.1 \times 10^{13}$ | G6<br>$4.1 \times 10^{13}$ | G13<br>$4.7 \times 10^{14}$ |
| Externally exposed portion 2b  Sample No.<br>Specific resistivity $\rho_g(\Omega \cdot cm)$ 25°C | G6<br>$4.1 \times 10^{13}$ | G13<br>$4.7 \times 10^{14}$ | G13<br>$4.7 \times 10^{14}$ | G13<br>$4.7 \times 10^{14}$ |
| Portion 2c at hard ware 4b  Sample No.<br>Specific resistivity $\rho_g(\Omega \cdot cm)$ 25°C | G6<br>$4.1 \times 10^{13}$ | G6<br>$4.1 \times 10^{13}$ | G13<br>$4.7 \times 10^{14}$ | G6<br>$4.1 \times 10^{13}$ |
| **Insulator**<br>Resistance value R(Ω) 25°C | $2.1 \times 10^{13}$ | | $2.3 \times 10^{13}$ | | $2.2 \times 10^{13}$ | | $2.3 \times 10^{13}$ | |
| Temperature coefficient of resistance value K | 9,580 | | 9,590 | | 9,590 | | 9,570 | |
| Temperature difference in temperature cycle test (°C) | >90 | | >90 | | >90 | | >90 | |
| Power frequency puncture voltage in oil (kv) | 282 | | 288 | | 283 | | 273 | |
| **Ion accumulation test**<br>Polarity of hard ware 4a | positive | negative | positive | negative | positive | negative | positive | negative |
| Amount of electric charge<br>corresponding to 50 years $C_0$ (coulomb) | 22 | | 20 | | 21 | | 20 | |
| Amount of electric charge until<br>breakdown $C_1$ (coulomb) | >22 | >22 | >20 | >20 | >21 | 17 | 17 | >20 |
| Estimated life (years) | >50 | >50 | >50 | >50 | >50 | 40 | 40 | >50 |
| Power frequency puncture voltage in oil<br>after ion accumulation test (kv) | 281 | 280 | 286 | 287 | 281 | X | X | 271 |
| Rate of decrease (%) | 0.4 | 0.7 | 0.7 | 0.3 | 0.7 | X | X | 0.7 |

TABLE 9(b)

| | Referential sample | Sample of the present invention | |
|---|---|---|---|
| Sample No. | I36 | I37 | I38 |
| Porcelain sample No. | P4 | P4 | |
| Specific resistivity of porcelain $\rho_p(\Omega \cdot cm)$ 25°C | $3.2 \times 10^{14}$ | $3.2 \times 10^{14}$ | |
| Glaze<br>Portion 2a at hard ware 4a    Sample No.<br>Specific resistivity $\rho_g(\Omega \cdot cm)$ 25°C | G13<br>$4.7 \times 10^{14}$ | G6<br>$4.1 \times 10^{13}$ | G6<br>$4.1 \times 10^{13}$ |
| Externally exposed portion 2b    Sample No.<br>Specific resistivity $\rho_g(\Omega \cdot cm)$ 25°C | G13<br>$4.7 \times 10^{14}$ | G6<br>$4.1 \times 10^{13}$ | G13<br>$4.7 \times 10^{14}$ |
| Portion 2c at hard ware 4b    Sample No.<br>Specific resistivity $\rho_g(\Omega \cdot cm)$ 25°C | G13<br>$4.7 \times 10^{14}$ | G6<br>$4.1 \times 10^{13}$ | G6<br>$4.1 \times 10^{13}$ |
| Insulator<br>Resistance value R($\Omega$) 25°C | $2.2 \times 10^{13}$ | $5.7 \times 10^{12}$ | $5.8 \times 10^{12}$ |
| Temperature coefficient of resistance value K | 9,570 | 9,570 | 9,580 |
| Temperature difference in temperature cycle test (°C) | >90 | >90 | >90 |
| Power frequency puncture voltage in oil (kv) | 254 | 274 | 272 |

| | Referential sample | | Sample of the present invention | | | |
|---|---|---|---|---|---|---|
| Ion accumulation test<br>Polarity of hard ware 4a | positive | negative | positive | negative | positive | negative |
| Amount of electric charge corresponding to 50 years $C_0$ (coulomb) | 21 | | 29 | | 29 | |
| Amount of electric charge until breakdown $C_1$ (coulomb) | 16 | 17 | >29 | >29 | >29 | >29 |
| Estimated life (years) | 38 | 40 | >50 | >50 | >50 | >50 |
| Power frequency puncture voltage in oil after ion accumulation test (kv) | X | X | 273 | 272 | 270 | 271 |
| Rate of decrease (%) | X | X | 0.4 | 0.7 | 0.7 | 0.4 |

From the results as shown in the above Table 9, it can be seen that it is sufficient to apply the glaze having a lower specific resistivity than that of the porcelain on the glaze portion 2a which contacts with cement at the side of the hard ware 4a which forms a positive electrode, and that the glaze can be applied on the entire surface of the porcelain of the insulator including both the glaze portions 2a and 2c which contact with cements and the externally exposed glaze portion 2b. The externally exposed glaze portion 2b can however be a conventional glaze, because it has no relation to dielectric breakdown due to high voltage DC.

Though the porcelain insulator of the present invention has been explained with reference to the porcelain insulators for high voltage DC use, the porcelain insulator of the present invention is of course usable also for high voltage AC use, because porcelain insulators for high voltage AC use have smaller rate of deterioration as compared with porcelain insulators for high voltage DC use.

As explained above, by defining the specific resistivity $\rho_p$ of the porcelain to $\rho_p \geqq 5.0 \times 10^{13} \Omega \cdot cm$ and adjusting the chemical composition of the glaze so that the glaze has a lower specific resistivity $\rho_g$ than the porcelain specific resistivity $\rho_p$, the porcelain insulator of the present invention achieves and maintains desired electrical properties and mechanical properties as a high voltage porcelain insulator and is usable with high stability and reliability for a long period of time without deteriorating under high DC or AC voltage.

## Claims

1. A high voltage porcelain insulator, comprising a porcelain body, and a glaze applied on at least one surface portion of the porcelain body, wherein said porcelain body has a specific resistivity $\rho_p$ of $\rho_p \geqq 5.0 \times 10^{13} \Omega \cdot cm$, and said glaze has a specific resistivity $\rho_g$ given by $\rho_g < \rho_p$.

2. A high voltage porcelain insulator as defined in claim 1, wherein

$$1.0 \times 10^{14} \leqq \rho_p \leqq 1.0 \times 10^{16} \Omega \cdot cm,$$

$$5.0 \times 10^{12} \leqq \rho_g \leqq 5.0 \times 10^{14} \Omega \cdot cm$$

and $\rho_g < \rho_p$.

3. A high voltage porcelain insulator as defined in claim 1, wherein $\rho_p \geqq 5.0 \times 10^{13} \Omega \cdot cm$, $\rho_g \geqq 1 \times 10^{13} \Omega \cdot cm$ and $\rho_g < 0.8 \ \rho_p$.

4. A high voltage porcelain insulator as defined in claim 1 wherein

$$1.0 \times 10^{14} \leqq \rho_g \leqq 1.0 \times 10^{16} \Omega \cdot cm,$$

$\rho_g \geqq 1 \times 10^{13} \Omega \cdot cm$ and $\rho_g < 0.8 \ \rho_g$.

5. A high voltage porcelain insulator according to any one of claims 1 to 4 wherein the chemical composition of the porcelain contains (by weight) 35 to 75% $SiO_2$, 15 to 55% $Al_2O_3$, not more than 1.5% $Na_2O$, not more than 7% $K_2O$, not more than 7% $BaO$, not more than 3% $MgO$ and not more than 3% $CaO$, the total amount of these last five components being in the range 4 to 11% by weight, and the total amount of $Na_2O$ and $K_2O$ being not more than 7% by weight.

6. A high voltage porcelain insulator according to any one of the preceding claims wherein said glaze of specific resistivity $\rho_g$ is applied to the surface of the porcelain body at least at a region located in the charge flow path through the insulator during use.

7. A high voltage porcelain insulator according to claim 6 having at least one hard ware (4a, 4b) forming an electrode secured to the porcelain body by a cement, said glaze of specific resistivity $\rho_g$ being interposed between said cement and the porcelain body.

8. A high voltage porcelain insulator according to claim 7 wherein said hard ware (4a) forms the positive electrode of the insulators.

## Patentansprüche

1. Hochspannungs-Porzellanisolator, bestehend aus einem Porzellankörper und einer Glasur, die zumindest auf einen Oberflächenbereich des Porzellankörpers aufgebracht ist, wobei der Porzellankörper einen spezifischen Widerstand $\rho_p$ von $\rho_p \geqq 5.0 \times 10^{13} \Omega \cdot cm$ hat und die Glasur einen spezifischen Widerstand $\rho_g$ hat, wobei $\rho_g < \rho_p$.

2. Hochspannungs-Porzellanisolator nach Anspruch 1, wobei

$$1.0 \times 10^{14} \leqq \rho_p \leqq 1.0 \times 10^{16} \Omega \cdot cm$$

$$5.0 \times 10^{12} \leqq \rho_g \leqq 5.0 \times 10^{14} \Omega \cdot cm$$

und $\rho_g < \rho_p$.

3. Hochspannungs-Porzellanisolator nach Anspruch 1, wobei $\rho_p \geqq 5.0 \times 10^{13} \Omega \cdot cm$, $\rho_g \geqq 1 \times 10^{16} \Omega \cdot cm$, und $\rho_g < 0.8 \ \rho_p$.

4. Hochspannungs-Porzellanisolator nach Anspruch 1, wobei

$$1,0 \times 10^{14} \leqq \rho_p \leqq 1,0 \times 10^{16} \Omega \cdot cm$$

$\rho_g \geqq 1 \times 10^{13} \Omega \cdot cm$ und $\rho_g < 0,8 \; \rho_p$.

5. Hochspannungs-Porzellanisolator nach einem der Ansprüche 1 bis 4, wobei die chemische Zusammensetzung des Porzellankörpers enthält: 35 bis 75 Gew.% $SiO_2$, 15 bis 55 Gew.% $Al_2O_3$, nicht mehr als 1,5 Gew.% $Na_2O$, nicht mehr als 7 Gew.% $K_2O$, nicht mehr als 7 Gew.% BaO, nicht mehr als 3% MgO und nicht mehr als 3 Gew.% CaO, wobei die Gesamtmenge der letztgenannten fünf Komponenten im Bereich von 4 bis 11 Gew.% liegt und wobei die Gesamtmenge von $Na_2O$ und $K_2O$ nicht mehr als 7 Gew.% beträgt.

6. Hochspannungs-Porzellanisolator nach einem der vorhergehenden Ansprüche, wobei die Glasur mit dem spezifischen Widerstand $\rho_g$ auf die Oberfläche des Porzellankörpers zumindest in einem Bereich aufgebracht wird, der in dem Ladungstransportweg durch den Isolator während des Gebrauchs liegt.

7. Hochspannungs-Porzellanisolator nach Anspruch 6, mit mindestens einem eine Elektrode bildenden Beschlag (4a, 4b), der mit einem Zement an dem Porzellankörper befestigt ist, wobei die Glasur mit dem spezifischen Widerstand $\rho_g$ zwischen dem Zement und dem Porzellankörper angeordnet ist.

8. Hochspannungs-Porzellanisolator nach Anspruch 7, wobei der Beschlag die positive Elektrode des Isolators bildet.

**Revendications**

1. Isolateur en porcelaine de haute tension comprenant un corps en porcelaine et un émail appliqué sur au moins une portion de surface du corps en porcelaine, où ledit corps en porcelaine a une résistivité spécifique $\rho_p$ de $\rho_p \geqq 5,0 \times 10^{13} \Omega \cdot cm$ et ledit émail a une résistivité spécifique $\rho_g$ donnée par $\rho_g < \rho_p$.

2. Isolateur en porcelaine de haute tension tel que défini à la revendication 1 où

$$1,0 \times 10^{14} \leqq \rho_p \leqq 1,0 \times 10^{16} \Omega \cdot cm,$$

$$5,0 \times 10^{12} \leqq \rho_g \leqq 5,0 \times 10^{14} \Omega \cdot cm$$

et $\rho_g < \rho_p$.

3. Isolateur en porcelaine de haute tension tel que défini à la revendication 1, où $\rho_p \geqq 5,0 \times 10^{13} \Omega \cdot cm$, $\rho_g \geqq 1 \times 10^{13} \Omega \cdot cm$ et $\rho_g < 0,8 \; \rho_p$.

4. Isolateur en porcelaine de haute tension tel que défini à la revendication 1 où

$$1,0 \times 10^{14} \leqq \rho_p \leqq 1,0 \times 10^{16} \Omega \cdot cm,$$

$\rho_g \geqq 1 \times 10^{13} \Omega \cdot cm$ et $\rho_g < 0,8 \; \rho_p$.

5. Isolateur en porcelaine de haute tension selon l'une quelconque des revendications 1 à 4 où la composition chimique de la porcelaine contient (en poids) 35 à 75 % de $SiO_2$, 15 à 55 % de $Al_2O_3$, pas plus de 1,5 % de $Na_2O$, pas plus de 7 % de $K_2O$, pas plus de 7 % de BaO, pas plus de 3 % de MgO et pas plus de 3 % de CaO, la quantité totale de ces cinq dernier composants étant dans la gamme de 4 à 11 % en poids et la quantité total de $Na_2O$ et de $K_2O$ ne dépassant pas 7 % en poids.

6. Isolateur en porcelaine de haute tension selon l'une quelconque des revendications précédentes où ledit émail de résistivité spécifique $\rho_g$ est appliqué à la surface du corps en porcelaine au moins en une région placée dans le trajet d'écoulement de la charge à travers l'isolateur pendant son utilisation.

7. Isolateur en porcelaine de haute tension selon la revendication 6 ayant au moins une partie métallique (4a, 4b) formant une électrode fixée au corps en porcelaine par un ciment, ledit émail de résistivité spécifique $\rho_g$ étant interposé entre ledit ciment et ledit corps en porcelaine.

8. Isolateur en porcelaine de haute tension selon la revendication 7 où ladite partie métallique (4a) forme l'électrode positive des isolateurs.

## FIG. 1

# FIG. 2

## FIG.3

## FIG.4